# EUROPÄISCHE PATENTSCHRIFT

(11) **EP 1 723 204 B1**
(45) Veröffentlichungstag und Bekanntmachung des Hinweises auf die Patenterteilung: **08.12.2010**
(21) Anmeldenummer: 05764680.4
(22) Anmeldetag: 11.02.2005
(51) Int. Cl.: C09B 67/22, C09D 11/00

(54) **VERWENDUNG EINER PIGMENTZUSAMMENSETZUNG MIT MISCHKRISTALLEN AUF BASIS VON C.I. PIGMENT YELLOW 74**
USE OF A PIGMENT COMPOSITION COMPRISING MIXED CRYSTALS BASED ON CI PIGMENT YELLOW 74
UTILISATION D UNE COMPOSITION DE PIGMENTS AVEC DES CRISTAUX MIXTES A BASE DE PIGMENT C.I. JAUNE 74

(30) Priorität: 01.03.2004 DE 102004010448
(43) Veröffentlichungstag der Anmeldung: 22.11.2006
(73) Patentinhaber: Clariant Produkte (Deutschland) GmbH, 65929 Frankfurt am Main (DE)
(72) Erfinder: SCHWEIKART, Karl-Heinz, 65760 Eschborn (DE); BLUM, David, 65812 Bad Soden (DE); GRIMM, Felix, W., 65719 Hofheim (DE); SCHMIDT, Martin, U., 65931 Frankfurt am Main (DE); GEISENBERGER, Josef, 65843 Sulzbach (DE)
(74) Vertreter: Hütter, Klaus
(86) Internationale Anmeldenummer: PCT/EP2005/001375
(87) Internationale Veröffentlichungsnummer: WO 2005/083010

(56) Entgegenhaltungen:
- EP-A- 1 316 588
- US-A- 4 251 441
- US-A- 4 457 783
- US-B1- 6 261 354
- LIU DONGZHI ET AL: "AN INVESTIGATION INTO THE SYNERGISM OF MONOAZOACETOACETANILIDE PIGMENTS" DYES AND PIGMENTS, ELSEVIER APPLIED SCIENCE PUBLISHERS. BARKING, GB, Bd. 18, Nr. 1, Januar 1992 (1992-01), Seiten 69-80, XP000259940 ISSN: 0143-7208

## Beschreibung

Die vorliegende Erfindung betrifft neue Verwendungen von speziellen Monoazopigmentzusammensetzungen auf Basis von C.I. Pigment Yellow 74, insbesondere für den Ink-Jet-Druck und für Farbfilter.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden. Um Drucke von exzellenter Qualität zu erhalten, müssen die Aufzeichnungsflüssigkeiten und die darin enthaltenen Farbmittel hohen Anforderungen genügen, insbesondere auch im Hinblick auf den gewünschten Farbton und die Zuverlässigkeit während des Druckvorgangs.
Neben farbstoffbasierenden Tinten werden in jüngster Zeit auch verstärkt pigmentierte Tinten im Ink-Jet-Druck eingesetzt. Die Feinteiligkeit der in den Tinten enthaltenen Pigmente ist eine Grundvoraussetzung für deren Anwendung im Ink-Jet-Druck, zum einen um ein Verstopfen der Düsen zu verhindern, zum anderen aber auch um eine hohe Transparenz und einen gewünschten Farbton zu erzielen.
Der Einsatz von C.I. Pigment Yellow 74 in Ink-Jet-Tinten ist allgemein bekannt. Jedoch erfüllen die in diesen Tinten eingesetzten Pigmente oftmals nicht die an sie gestellten Anforderungen hinsichtlich eines gewünschten grünstichig-gelben Farbtons unter gleichzeitiger Gewährleistung eines einwandfreien Druckvorgangs ohne Verstopfung der Düsen.

Es sind Mischungen verschiedener Monoazo-Gelbpigmente mit C.I. Pigment Yellow 74 bekannt, die Verbesserungen in diversen Anwendungen erbringen sollen.
EP-00 79 303 A3 beschreibt eine deckende Form von C.I. Pigment Yellow 74, enthaltend eine Mischung von 99,0 bis 80,0 Gew.-% C.I. Pigment Yellow 74 und 1,0 bis 20,0 Gew.-% eines verschiedenen Monoazo-Gelbpigmentes auf der Basis von Acetessig-o-anisidid.
Aus der DE-A-27 27 531 (entsprechend US-A-4,251,441 und FR-A-23 94 584) sind Gemische aus 75 bis 85 Gew.-% C.I. Pigment Yellow 74 und 25 bis 15 Gew.-% C.I. Pigment Yellow 65 bekannt. Zur Verbesserung der Dispergierbarkeit werden dabei alkalilösliche harzartige Produkte, wie beispielsweise Kolophoniumharze oder Kolophoniumharzderivate, zugesetzt. Die US-B1-6,261,354 offenbart eine transparente, harzhaltige Pigmentkomposition als Farbmittel in konventionellen Druckfarben. Diese wird hergestellt durch Kupplung einer Mischung von Diazoniumsalzen erhältlich aus 98 bis 85 Mol-% 2-Methoxy-4-nitroanilin und 2 bis 15 Mol-% 4-Chlor-2-nitroanilin mit Acetessig-o-anisidid.

In keiner der oben genannten Patentschriften wird der Einsatz der Pigmentgemische im Ink-Jet-Druckverfahren beschrieben. Darüber hinaus wirken sich die teilweise in den Herstellungsverfahren beschriebenen Zusätze, wie beispielsweise Kolophoniumharze oder deren Derivate ungünstig auf die Eignung der damit behandelten Pigmente im Ink-Jet-Druck aus, da sie zum Verstopfen der Düsen führen können. In vielen Fällen wird ein rotstichiges Gelb erzielt.

In "Dyes and Pigments", vol.18, (1992), Nr.1, Barkind, Essex (GB), Seiten 69-80, werden Mischungen aus P.Y.74 und P.Y.65 sowie deren Verwendung in Tinten und Coatings erwähnt. Die EP,A,1,316,588 beschreibt Mischungen enthaltend P.Y.74 und einem P.Y.-Derivat verwendet in Ink-Jet-Tinten.

Ziel der vorliegenden Erfindung war es daher, transparente, grünstichig-gelbe Pigmentzusammensetzungen auf Basis von C.I. Pigment Yellow 74 herzustellen, die die oben genannten Nachteile nicht aufweisen und insbesondere als Farbmittel für das Ink-Jet-Druckverfahren und für Farbfilter geeignet sind.

Es wurde gefunden, dass diese Aufgabe überraschenderweise durch die Verwendung spezieller, nachstehend definierter Pigmentzusammensetzungen gelöst wird.

Gegenstand der Erfindung ist die Verwendung einer Pigmentzusammensetzung, enthaltend zwischen 86,0 und 99,9 Gesamt-Mol-%, vorzugsweise zwischen 86,5 und 99,5 Gesamt-Mol-%, insbesondere zwischen 87,0 und 94,O Gesamt-Mol-% an C.I. Pigment Yellow 74-Molekülen und zwischen 14,0 und 0,1 Gesamt-Mol-%, vorzugsweise zwischen 13,5 und 0,5 Gesamt-Mol-%, insbesondere zwischen 13,0 und 6,0 Gesamt-Mol-%, an mindestens einem Monoazopigment der Formel (1) 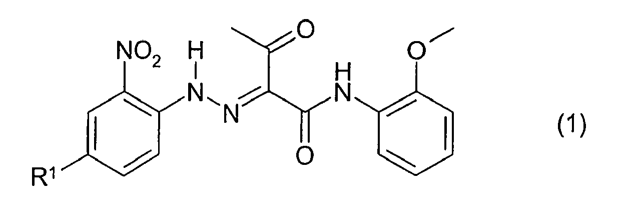 worin R¹ Cl, OCH₃, CH₃ oder NO₂ bedeutet,
als Farbmittel zum Pigmentieren von Ink-Jet-Tinten und Farbfiltern.

Die Verbindung der Formel (1) mit R¹ gleich Chlor ist als C.I. Pigment Yellow 73 bekannt.
Die Verbindung der Formel (1) mit R¹ gleich Methoxy ist als C.I. Pigment Yellow 65 bekannt.
Die Verbindung der Formel (1) mit R¹ gleich Methyl ist als C.I. Pigment Yellow 203 bekannt.

Die Formel (1) ist als idealisierte Darstellung zu verstehen und umfasst auch die entsprechenden tautomeren Formen sowie die möglichen cis/trans-Isomere jeder tautomeren Form.

Von besonderem Interesse sind Pigmentzusammensetzungen, die zwischen 88 und 92 Gesamt-Mol-% an C.I. Pigment Yellow 74-Molekülen und zwischen 12 und 8 Gesamt-Mol-% an C.I. Pigment Yellow 65-Molekülen enthalten.

Die erfindungsgemäß verwendeten Pigmentzusammensetzungen können durch Cosynthese, durch gemeinsames Umkristallisieren oder durch gemeinsamen Finish von C.I. Pigment Yellow 74 mit der Verbindung der Formel (1) in den besagten molaren Mengenverhältnissen hergestellt werden.
Bei der Cosynthese wird eine Mischung aus 5-Nitro-2-aminoanisol und mindestens einem Amin der Formel (2) 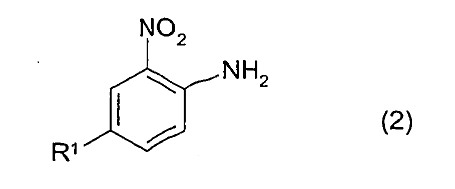 diazotiert und mit Acetessig-o-anisidid i n einem Temperaturbereich zwischen -5°C und 80°C, vorzugsweise zwischen 5°C und 35°C, und bei einem pH-Wert zwischen pH 3 und pH 14, vorzugsweise zwischen 3 und 11, insbesondere zwischen pH 3,5 und pH 10 gekuppelt, wobei das molare Mischungsverhältnis der genannten Amine wie vorstehend beschrieben ist.

Bei der beschriebenen Cosynthese entsteht ein substantieller Anteil an Mischkristallen aus C.I. Pigment Yellow 74 und der Verbindung der Formel (1). Dieser substantielle Anteil ist meist größer als 15 Gew.-%, vorzugsweise größer als 30 Gew.-%, beispielsweise größer als 50 Gew.-%, und oftmals größer als 75 Gew.-%, bezogen auf das Gesamtgewicht der Pigmentzusammensetzung. Der übrige nicht aus Mischkristallen bestehende Anteil der Pigmentzusammensetzung besteht aus reinem C.I. Pigment Yellow 74 oder einer physikalischen Mischung mit der Verbindung der Formel (1).

Im Folgenden ist im Begriff "Pigmentzusammensetzung" auch der Fall eingeschlossen, dass die Pigmentzusammensetzung aus nur einem erfindungsgemäßen Mischkristall besteht.

Unter Mischkristallen werden im Sinne der vorliegenden Erfindung auch "feste Lösungen" oder "solid solutions" verstanden. Die Eigenschaften der Mischkristalle unterscheiden sich sowohl von den Eigenschaften der Einzelkomponenten, als auch von den Eigenschaften der physikalischen Mischungen der Einzelkomponenten. Insbesondere unterscheiden sich die Röntgenpulverdiagramme der Mischkristalle von denen der entsprechenden physikalischen Mischungen und von der Summe der Pulverdiagramme der Einzelverbindungen.

Die Mischkristalle selbst können zwischen 0,1 und 99,9 Mol-%, vorzugsweise zwischen 70,0 und 99,9 Mol-%, insbesondere zwischen 85,0 und 99,9 Mol-%, an C.I. Pigment Yellow 74, und zwischen 99,9 und 0,1 Mol-%, vorzugsweise zwischen 30,0 und 0,1 Mol-%, insbesondere zwischen 15,0 und 0,1 Mol-%, einer Verbindung der Formel (1) oder einer beliebigen Mischung aus mehreren, z.B. 2 oder 3, Verbindungen der Formel (1), enthalten.

Bevorzugte binäre Mischkristalle bestehen aus C.I. Pigment Yellow 74 und einer der Verbindungen der Formel (1), insbesondere solchen mit R¹ = OCH₃ oder R¹ = Cl vorzugsweise im molaren Mengenverhältnis von 99,9 zu 0,1 bis 86,5 zu 13,5, insbesondere von 99 zu 1 bis 87 zu 13.

Die Mischkristalle können in verschiedenen Kristallmodifikationen auftreten. Beispielsweise können die Mischkristalle isotyp zu C.I. Pigment Yellow 74 oder zu einer der Kristallmodifikationen einer der Verbindungen der Formel (1) sein.

In Abhängigkeit von der Reinheit der Edukte, den Konzentrationen, den angewandten Temperaturen und Temperaturverläufen, dem zeitlichen Verlauf der Synthese und einer eventuellen Nachbehandlung, dem Druck, der Anwesenh eit von Verunreinigungen oder Additiven, und der Gegenwart von Impfkristallen können entweder nur Mischkristalle einer einzigen Phase, oder Mischkristalle verschiedener Phasen, oder eine Mischung aus Mischkristallen und einer oder mehreren Reinverbindungen entstehen.

Die Mischkristalle zeichnen sich überraschenderweise durch grünstichig-gelbe Farbtöne aus.

Die erfindungsgemäßen Pigmentzusammensetzungen können auch beispielsweise durch getrennte Diazotierung von 5-Nitro-2-aminoanisol und ei nem oder mehreren Aminen der Formel (2) mit anschließender Mischung der Diazoniumsalze und nachfolgender Kupplung der Mischung mit Acetessig-o-anisidid hergestellt werden.

Die erfindungsgemäßen Pigmentzusammensetzungen können auch beispielsweise durch stufenweise Diazotie rung eines Amins der Formel (2) in Gegenwart von diazotiertem 5-Nitro-2-ami noanisol oder durch Diazotierung von 5-Nitro-2-aminoanisol in Gegenwart von ei nem oder mehreren durch Diazotierung von Aminen der Formel (2) hergestellten Diazoniumsalzen mit nachfolgender Kupplung der Mischung mit Acetessig-o-anisidid hergestellt werden.

Die erfindungsgemäßen Pigmentzusammensetzungen können auch hergestellt werden, indem mindestens ein diazotiertes Amin der Formel (2) mit Acetessig-o-anisidid in Gegenwart von fertigem C.I. Pigment Yellow 74 gekuppelt wird.

Die erfindungsgemäßen Pigmentzusammensetzungen können auch hergestellt werden, indem diazotiertes 5-Nitro-2-aminoanisol mit Acetessig-o-anisidid in Gegenwart mindestens einer Verbindung der Formel (1) gekuppelt wird.

Für die Diazotierungsreaktion eignen sich Alkalimetallnitrite oder die Alkylnitrite kurzkettiger Alkane, zusammen mit starken Mineralsäuren. Besonders geeignet sind Natriumnitrit und Salzsäure. Die Reaktion kann in einem Temperaturbereich von -5°C bis +35°C durchgeführt werden, vorzugsweise zwischen 0°C und 10°C. Obwohl nicht erforderlich, können bei der Diazotierung nichtionogene, anionische oder kationische oberflächenaktive Substa nzen zugegen sein. Gegebenenfalls können auch weitere Hilfsmittel verwendet werden, sofern diese die erfindungsgemäßen Vorteile, insbesondere die drucktechnischen Eigenschaften nicht beeinträchtigen.
Die Kupplung ist nach der direkten oder indirekten Methode möglich, erfolgt vorzugsweise jedoch direkt, d.h. das Diazoniumsalz wird zur vorgelegten Kuppelkomponente gegeben. Die Kuppelreaktion kann in einem Temperaturbereich zwischen -5°C und 80° C durchgeführt werden, vorzugsweise zwischen 5°C und 25°C, und bei einem pH-Wert zwischen pH 3 und pH 14, vorzugsweise zwischen 3 und 11, insbesondere zwischen pH 3,5 und pH 10. Die Azokupplungsreaktion erfolgt vorzugsweise in wässriger Lösung oder Suspension, es können aber auch organische Lösemittel, gegebenenfalls im Gemisch mit Wasser eingesetzt werden.

Im Allgemeinen wird die Kuppelkomponente, bezogen auf die Diazoniumverbindung, in einem leichten Überschuss eingesetzt, vorzugsweise wird 1 Äquivalent Diazokomponente mit 1,001 bis 1,10 Äquivalenten der Kuppelkomponente umgesetzt.
Nach der Kupplung werden die erfindungsgemäßen Pigmentzusammensetzungen bevorzugt einer Wärmebehandlung in wässrigem, wässrig-organischem oder organischem Medium bei Temperaturen zwischen 60°C und 90°C, vorzugsweise zwischen 60°C und 85°C, gegebenenfalls unter Druck, und für 1 bis 6 Stunden unterworfen. Wie vorstehend beschrieben, können dabei bestimmte Kristallphasen entstehen oder Phasenumwandlungen eintreten. Anschließend können die erhaltenen Pigmentsuspensionen auf die übliche Weise filtriert, der Presskuchen mit Wasser salzfrei gewaschen, getrocknet und gemahlen werden.
Das aus der Synthese erhaltene Pigment kann einer üblichen mechanischen Feinverteilung, z.B. einer Mahlung, unterworfen werden.

Zur Erleichterung der Mischkristallbildung, zur Stabilisierung der Mischkristalle, zur Verbesserung der coloristischen Eigenschaften und/oder zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden, sofern diese die erfindungsgemäßen Vorteile, insbesondere die drucktechnischen Eigenschaften nicht beeinträchtigen. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muss zuvor durch orientierende Versuche ermittelt werden.

Es ist auch möglich, einen oder mehrere der genannten Verfahrensschritte zur Herstellung der erfindungsgemäßen Pigmentzusammensetzungen in einem Mikroreaktor durchzuführen, wie z.B. in EP-A-1 257 602 beschrieben. In diesem Fall kann die Wärmebehandlung auch deutlich kürzer als eine Stunde sein, beispielsweise 0,01 bis 600 Sekunden.

Die erfindungsgemäßen Pigmentzusammensetzungen können auch durch Mischung von C.I. Pigment Yellow 74 und einer oder mehrerer Verbindungen der Formel (1) mit anschließender Behandlung z.B. Umkristallisieren und/oder Erwärmen z.B. in Wasser und/oder Lösungsmittel, auch unter Druck, erhalten werden.

Aus dem Stand der Technik ist bekannt, Pigmente und Pigmentzusammensetzungen mit Kolophoniumharzen zu belegen, um deren Dispergierbarkeit in Offset-Druckfarben zu verbessern. Es zeigte sich, dass harzbelegte Pigmente und Pigmentzusammensetzungen sich im Ink-Jet-Druck nachteilig auswirken, indem sie zum Ausfall der Düsen führen können. Überraschenderweise wurde gefunden, dass die erfindungsgemäß beschriebene Pigmentzusammensetzung weitgehend (maximal 5 Gew.-%, vorzugsweise maximal 1 Gew.-%) oder völlig auf Kolophoniumharze verzichten kann, um dennoch hinreichend gut in einer Ink-Jet-Tintengrundlage dispergierbar zu sein, und zu hervorragenden Druckergebnissen führt.

Ink-Jet-Tinten können hergestellt werden, indem die Pigmentzusammensetzung in das Mikroemulsionsmedium, in das nicht-wässrige Medium oder in das Medium zur Herstellung der UV-härtbaren Tinte oder in das Wachs zur Herstellung einer Hot-Melt-Ink-Jet-Tinte eindispergiert wird.
Zweckmäßigerweise werden die dabei erhaltenen Drucktinten für Ink-Jet-Anwendungen anschließend filtriert (z.B. über einen 1 µm Filter).

Ink-Jet-Tinten auf Lösungsmittelbasis enthalten im Wesentlichen 0,5 bis 30 Gew.-%, vorzugsweise 1 bis 15 Gew.-%, der erfindungsgemäßen Pigmentzusammensetzung, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.

Gegebenenfalls können die lösungsmittelbasierenden Ink-Jet-Tinten noch weitere Zusatzstoffe enthalten, wie z.B. Netzmittel, Entgaser/Entschäumer, Konservierungsmittel und Antioxidantien.
Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, der erfindungsgemäßen Pigmentzusammensetzung, 0,5 bis 95 Gew.-% Wasser und 0,5 bis 95 Gew.-% organische Lösungsmittel und/oder Grenzflächenvermittler.
UV-härtbare Tinten enthalten im wesentlichen 0,5 bis 30 Gew.-% der erfindungsgemäßen Pigmentzusammensetzung, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt-Ink-Jet-Tinten bestehen im Wesentlichen aus 20 bis 90 Gew.-% Wachs und 1 bis 10 Gew.-% der erfindungsgemäßen Pigmentzusammensetzung. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Weiterhin sind die erfindungsgemäßen Pigmentzusammensetzungen auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.
Bei der Herstellung sogenannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteile (z.B. TFT-LCD = Thin Film Transistor Liquid Crystal Displays oder z.B. (S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Colour Filter auch durch Ink-Jet-Druckverfahren oder andere geeignete Druckverfahren aufgebracht werden.

Selbstverständlich lassen sich die erfindungsgemäßen Pigmentzusammensetzungen auch allgemein zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Tinten, Druckfarben und Saatgut.

In den nachfolgenden Beispielen bedeuten Teile jeweils Gewichtsteile und Prozente jeweils Gewichtsprozente. Unter "Gesamt-Mol-%" sind die Mol-Prozent einer angegebenen chemischen Verbindung in der gesamten Pigmentzusammensetzung zu verstehen.

### I. Herstellung von Pigmentzusammensetzungen

### Beispiel 1:

90 Gesamt-Mol-% C.I. Pigment Yellow 74 und 10 Gesamt-Mol-% C.I. Pigment Yellow 65

### a) Diazo

121,1 Teile 5-Nitro-2-aminoanisol und 13,5 Teile 3-Nitro-4-aminoanisol werden in 336 Teilen Wasser und 188 Teilen Salzsäure 31 %ig angeschlämmt. Mit 672 Teilen Eis-Wasser-Gemisch wird auf 0°C abgekühlt, durch Zugabe von 107,8 Teilen Natriumnitrit-Lösung 40 %ig diazotiert. Durch Zugabe von 1,92 Teilen ^{®}Decalite und anschließende Filtration wird die Diazo-Lösung geklärt.

### b) Kuppler

In 2152 Teilen Wasser und 94,1 Teilen Natronlauge 33%ig werden 165,8 Teile Acetessig-o-anisidid gelöst. Durch Zugabe von Eis wird auf 10°C abgekühlt, mit 80 Teilen Essigsäure 80 %ig der Kuppler gefällt und mit Natronlauge 33%ig auf pH 9,8 gestellt.

### c) Kupplung

Die Diazo-Lösung wird in einer Stunde zum Kuppler zugegeben. Dab ei wird der pH mit Natronlauge 6 %ig bei 3,8 bis 4,2 gehalten. Dann wird 1 Stunde bei 80°C gerührt. Die Suspension wird filtriert, der Presskuchen wird bei 60°C getrocknet.

Es entstehen zwei verschiedene Mischkristalle. Der eine entstehende Mischkristall (hoher Gehalt an C.I. Pigment Yellow 74 und niedriger Gehalt an Pigment der Formel (1) mit R¹ = OCH₃) ist isotyp zu C.I. Pigment Yellow 74, der andere entstehende Mischkristall (niedriger Gehalt an C.I. Pigment Yellow 74- und hoher Gehalt an Pigment der Formel (1) mit R¹ = OCH₃) ist isotyp zur Kristallstruktur des reinen Pigments der Formel (1) mit R¹ = OCH₃.
Diese erfindungsgemäße Pigmentzusammensetzung zeichnet sich im Röntgenpulverdiagramm durch folgende charakteristische Linien aus (Cu-K_{α}-Strahlung, 2 Theta-Werte in Grad, Meßgenauigkeit +/- 0,2°, Intensitäten: vs = sehr stark, s = stark, m = mittel, w = schwach, alle anderen Linien sehr schwach):

| 2 theta: | relative Intensität: |
|---|---|
| 7.53 | m |
| 8.73 | |
| 10.39 | m |
| 11.36 | |
| 11.86 | vs |
| 12.79 | |
| 13.37 | w |
| 15.17 | w |
| 16.12 | |
| 17.27 | |
| 17.74 | m, breit |
| 18.37 | |
| 18.89 | |
| 19.73 | |
| 20.24 | m |
| 21.08 | m |
| 22.00 | |
| 22.83 | w |
| 24.03 | w |
| 25.21 | m, Schulter |
| 25.57 | s |
| 26.47 | s-m |
| 26.79 | vs |
| 27.33 | m |
| 28.21 | |
| 30.12 | |
| 30.79 | |
| 31.51 | |
| 33.60 | |

Diese erhaltene Mischung zweier verschiedener erfindungsgemäßer Mischkristalle zeichnet sich durch einen grünstichig-gelben Farbton relativ zu C.I. Pigment Yellow 74 aus. Dies ist überraschend, da reines Pigment der Formel (1) mit R¹ = OCH₃ einen deutlich röteren Farbton als C.I. Pigment Yellow 74 besitzt. Das Röntgenpulverdiagramm der erfindungsgemäßen Pigmentzusammensetzung unterscheidet sich deutlich vom Röntgenpulverdiagramm einer physikalischen Mischung von getrennt hergestelltem C.I. Pigment Yellow 74 und dem Monoazopigment der Formel (1) mit R¹ = OCH₃ im Mol-Verhältnis 9 zu 1.

### Beispiel 2:

93 Gesamt-Mol-% C.I. Pigment Yellow 74 und 7 Gesamt-Mol-% C.I. Pigment Yellow 65

Die Synthese erfolgt analog zu Beispiel 1, man setzt aber 125,1 Teile 5-Nitro-2-aminoanisol und 9,4 Teile 3-Nitro-4-aminoanisol ein. Man erhält eine Mischung aus Mischkristallen.

### Beispiel 3:

95 Gesamt-Mol-% C.I. Pigment Yellow 74 und 5 Gesamt-Mol-% C.I. Pigment Yellow 65

Die Synthese erfolgt analog zu Beispiel 1, man setzt aber 127,8 Teile 5-Nitro-2-aminoanisol und 6,7 Teile 3-Nitro-4-aminoanisol ein. Man erhält eine Mischung aus Mischkristallen.

### Beispiel 4:

97 Gesamt-Mol-% C.I. Pigment Yellow 74 und 3 Gesamt-Mol-% C.I. Pigment Yellow 65

Die Synthese erfolgt analog zu Beispiel 1, man setzt aber 130,5 Teile 5-Nitro-2-aminoanisol und 4,0 Teile 3-Nitro-4-aminoanisol ein.

### Beispiel 5:

98 Gesamt-Mol-% C.I. Pigment Yellow 74 und 2 Gesamt-Mol-% C.I. Pigment Yellow 65

Die Synthese erfolgt analog zu Beispiel 1, man setzt aber 131,8 Teile 5-Nitro-2-aminoanisol und 2,7 Teile 3-Nitro-4-aminoanisol ein. Man erhält einen Mischkristall.

### Beispiel 6:

90 Gesamt-Mol-% C.I. Pigment Yellow 74 und 10 Gesamt-Mol-% C.I. Pigment Yellow 73

### a) Diazo

121,1 Teile 5-Nitro-2-aminoanisol und 13,8 Teile 2-Nitro-4-chloranilin werden in 336 Teilen Wasser und 188 Teilen Salzsäure 31 %ig angeschlämmt. Mit 672 Teilen Eis-Wasser-Gemisch wird auf 0°C abgekühlt, durch Zugabe von 107,8 Teilen Natriumnitrit-Lösung 40 %ig diazotiert. Durch Zugabe von 1,92 Teilen Decalite und anschließende Filtration wird die Diazo-Lösung geklärt.

### b) Kuppler

In 2152 Teilen Wasser und 94,1 Teilen Natronlauge 33%ig werden 165,8 Teile Acetessig-o-anisidid gelöst. Durch Zugabe von Eis wird auf 10°C abgekühlt, mit 80 Teilen Essigsäure 80 %ig der Kuppler gefällt und mit Natronlauge 33 %ig auf pH 9,8 gestellt.

### c) Kupplung

Die Diazo-Lösung wird in einer Stunde zum Kuppler zugegeben. Dabei wird der pH mit Natronlauge 6 %ig bei 3,8 bis 4,2 gehalten. Dann wird 1 Stunde bei 80°C gerührt. Die Suspension wird filtriert, der Presskuchen wird bei 60°C getrocknet.

Der erhaltene Mischkristall zeichnet sich durch einen grünstichig-gelben Farbton relativ zu C.I. Pigment Yellow 74 aus. Dies ist überraschend, da reines Pigment C.I. Pigment Yellow 73 einen röteren Farbton als C.I. Pigment Yellow 74 besitzt. Der entstehende Mischkristall ist isotyp zu C.I. Pigment Yellow 74 und zeichnet sich im Röntgenpulverdiagramm durch folgende charakteristische Linien aus (Cu-K_{α}-Strahlung, 2 Theta-Werte in Grad, Meßgenauigkeit +/- 0,2°, Intensitäten: vs = sehr stark, s = stark, m = mittel, alle anderen Linien schwach):

| 2 theta: | relative Intensität: |
|---|---|
| 7.50 | m |
| 8.74 | |
| 11.36 | |
| 11.84 | vs |
| 13.36 | |
| 15.14 | |
| 16.11 | |
| 17.29 | |
| 17.72 | m |
| 20.25 | m |
| 21.12 | m |
| 22.09 | |
| 22.82 | |
| 23.98 | |
| 25.57 | s |
| 26.76 | vs |
| 27.35 | |
| 28.08 | |
| 30.81 | |
| 31.40 | |
| 32.45 | |
| 33.63 | |

Wenn man demgegenüber C.I. Pigment Yellow 74 und C.I. Pigment Yellow 73 nach demselben Verfahren einzeln synthetisiert, und die Pigmente anschließend im Mol-Verhältnis 9 zu 1 physikalisch mischt, erhält man folgendes, deutlich unterschiedliches Röntgenpulverdiagramm:

| 2 theta: | relative Intensität: |
|---|---|
| 5.03 | |
| 7.55 | m |
| 8.76 | |
| 10.21 | |
| 10.80 | |
| 11.34 | |
| 11.88 | vs |
| 13.43 | |
| 15.17 | |
| 17.16 | |
| 17.67/17.83 | m (Doppelpeak) |
| 20.18 | m |
| 21.14 | m |
| 22.07 | |
| 22.85 | |
| 23.28 | |
| 24.03 | |
| 24.97 | Schulter |
| 25.55 | s |
| 26.80 | vs |
| 27.43 | m |
| 28.16 | |
| 30.76 | |
| 31.46 | |
| 32.50 | |
| 33.77 | |

Diese physikalische Mischung aus C.I. Pigment Yellow 74 und C.I. Pigment Yellow 73 im Mol-Verhältnis 9 zu 1 weist einen deutlich röteren Farbton auf als die zuvor beschriebene erfindungsgemäße Pigmentzusammensetzung aus C.I. Pigment Yellow 74 und C.I. Pigment Yellow 73 im Mol-Verhältnis 9 zu 1.

### Beispiel 7:

95 Gesamt-Mol-% C.I. Pigment Yellow 74 und 5 Gesamt-Mol-% C.I. Pigment Yellow 73

Die Synthese erfolgt analog zu Beispiel 6, man setzt aber 127,8 Teile 5-Nitro-2-aminoanisol und 6,9 Teile 2-Nitro-4-chloranilin ein. Man erhält einen Mischkristall.

### Beispiel 8:

95 Gesamt-Mol-% C.I. Pigment Yellow 74 und 5 Gesamt-Mol-% C.I. Pigment Yellow 203

### a) Diazo

127,8 Teile 5-Nitro-2-aminoanisol und 6,1 Teile 2-Nitro-4-methylanilin werden in 336 Teilen Wasser und 188 Teilen Salzsäure 31 %ig angeschlämmt. Mit 672 Teilen Eis-Wasser-Gemisch wird auf 0°C abgekühlt, durch Zugabe von 107,8 Teilen Natriumnitrit-Lösung 40 %ig diazotiert. Durch Zugabe von 1,92 Teilen Decalite und anschließende Filtration wird die Diazo-Lösung geklärt.

### b) Kuppler

In 2152 Teilen Wasser und 94,1 Teilen Natronlauge 33%ig werden 165,8 Teile Acetessig-o-anisidid gelöst. Durch Zugabe von Eis wird auf 10°C abgekühlt, mit 80 Teilen Essigsäure 80 %ig der Kuppler gefällt und mit Natronlauge 33 %ig auf pH 9,8 gestellt.

### c) Kupplung

Die Diazo wird in einer Stunde zum Kuppler zugegeben. Dabei wird der pH mit Natronlauge 6 %ig bei 3,8 bis 4,2 gehalten. Dann wird 1 Stunde bei 80°C gerührt. Die Suspension wird filtriert, der Presskuchen wird bei 60°C getrocknet.

Vergleichsbeispiel 9 (nach DE-A-27 27 531, jedoch ohne Harz): 85 Gesamt-Mol-% C.I. Pigment Yellow 74 und 15 Gesamt-Mol-% C.I. Pigment Yellow 65

### a) Diazo

114,2 Teile 5-Nitro-2-aminoanisol und 20,2 Teile 3-Nitro-4-aminoanisol werden in einem Gemisch von 246 Teilen 31 %iger Salzsäure und 84 Teilen Wasser in die Hydrochloride überführt und bei 0-10°C mit 138 Teilen 40 %iger Natriumnitrit-Lösung diazotiert.

### b) Kuppler

172,4 Teile Acetessig-o-anisidid werden in 2400 Teilen Wasser und 162,8 Teilen 33%iger Natronlauge bei Raumtemperatur gelöst und diese Lösung mit einer Lösung eines anionischen Dispergiermittels versetzt, das 3 Teile des Natriumsalzes des Diisodecyl-esters der Sulfobernsteinsäure enthält. Darauf wird das Acetessigsäure-o-anisidid aus der Lösung bei 15°C durch Zugabe von 92,4 Teilen Eisessig zu einer feinen Suspension gefällt. Der pH-Wert wird auf 6,5 erhöht.

### c) Kupplung

Durch kontinuierliche Zugabe der geklärten Diazoniumsalzlösung wird innerhalb 1 Stunde gekuppelt. Die Suspension des Kupplungsproduktes wird für 1 Stunde auf 90°C erhitzt. Durch Verdünnen mit kaltem Wasser wird dann auf 70°C abgekühlt und das fertige Pigment abgesaugt, gewaschen, getrocknet und gemahlen.

### II. Herstellung von Farbmittelzubereitungen

Die Pigmentzusammensetzung wurde, entweder als Pulver oder als Presskuchen, zusammen mit den nachstehend genannten Dispergiermitteln, dem organischen Lösemittel und den anderen Zusätzen in entionisiertem Wasser angeteigt und dann mit einem Dissolver homogenisiert und vordispergiert. Die anschließende Feindispergierung erfolgte mit Hilfe einer Perlmühle, wobei die Mahlung unter Kühlung bis zur gewünschten Teilchengrößenverteilung der Pigmentpartikel erfolgte. Im Anschluss wurde die Dispersion mit entionisiertem Wasser auf die gewünschte Pigmentendkonzentration eingestellt.

Die in den folgenden Beispielen und Vergleichsbeispielen beschriebenen Farbmittelzubereitungen wurden nach dem zuvor beschriebenen Verfahren hergestellt, wobei die folgenden Bestandteile in den angegebenen Mengen so verwendet wurden, dass 100 Teile der jeweiligen Farbmittelzubereitungen entstehen und Teile Gewichtsteile bedeuten.

### Beispiel A:

| | |
|---|---|
| 20 Teile | Pigmentzusammensetzung aus Beispiel 1 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |
| | |

### Beispiel B:

| | |
|---|---|
| 20 Teile | Pigmentzusammensetzung aus Beispiel 3 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Beispiel C:

| | |
|---|---|
| 20 Teile | Pigmentzusammensetzung aus Beispiel 6 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Beispiel D:

| | |
|---|---|
| 20 Teile | Pigmentzusammensetzung aus Beispiel 7 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Vergleichsbeispiel E:

| | |
|---|---|
| 20 Teile | kommerzielles C.I. Pigment Yellow 74 enthaltend Kolophoniumharz |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Vergleichsbeispiel F:

| | |
|---|---|
| 20 Teile | C.I. Pigment Yellow 74 ohne Kolophoniumharz |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Vergleichsbeispiel G:

| | |
|---|---|
| 20 Teile | Pigmentzusammensetzung aus Vergleichsbeispiel 9 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### Vergleichsbeispiel H:

| | |
|---|---|
| 18 Teile | kommerzielles C.I. Pigment Yellow 74 enthaltend Kolophoniumharz |
| 2 Teile | C.I. Pigment Yellow 65 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |

### III. Prüfung der koloristischen Eigenschaften der Farbmittelzubereitungen

### UV-Vis:

Zur Aufnahme der UV-Vis-Spektren wurden die Farbmittelzubereitungen mit destilliertem Wasser verdünnt und mit Hilfe eines Lambda 20 der Firma Perkin Elmer im Bereich von 300 bis 700 nm vermessen. Die in Tabelle 1 angegebenen Werte stellen die jeweiligen Absorptionsmaxima dar.

### Farbstärke, Farbtondifferenz und Transparenz:

Zur Bestimmung der Farbstärke- und Farbtondifferenz dH wurden in einer Weissaufhellung jeweils 0,5 g der Farbmittelzubereitung mit 50,0 g Standard-Weissdispersion homogenisiert und auf eine Prüfkarte aufgezogen. Anschließend wurden die koloristischen Eigenschaften (Farbstärke und Farbton -dH-) mit Hilfe eines Spektrophotometers CM-3700d der Firma Minolta bestimmt.
Zur Bestimmung der Transparenz wurden jeweils 2,5 g der Farbmittelzubereitung mit 12,5 g destilliertem Wasser und 10,0 g eines Acrylatfirnisses homogenisiert und auf eine Prüfkarte aufgezogen. Die Beurteilung der Transparenz erfolgte anschließend visuell.
Als Standard für die Farbstärke (100%), die Farbtondifferenz dH und die Transparenz wurde die Farbmittelzubereitung von Vergleichsbeispiel F herangezogen.
Die Farbtondifferenz dH wurde dabei wie folgt beurteilt:
-VI dH > -2,01 (bedeutend röter)
-V dH = -1,41 bis -2,00 (wesentlich röter)
-IV dH = -0,81 bis -1,40 (deutlich röter)
-III dH = -0,51 bis -0,80 (merklich röter)
-II dH = -0,21 bis -0,50 (etwas röter)
-I dH = -0,11 bis -0,20 (eine Spur röter)
/=/ dH = 0,10 bis -0,10 (etwa wie)
+I dH = 0,11 bis 0,20 (eine Spur grüner)
+II dH = 0,21 bis 0,50 (etwas grüner)
+III dH = 0,51 bis 0,80 (merklich grüner)
+IV dH = 0,81 bis 1,40 (deutlich grüner)
+V dH = 1,41 bis 2,00 (wesentlich grüner)
+VI dH > 2,01 (bedeutend grüner)

Die Transparenz wurde dabei wie folgt beurteilt.
-VI bedeutend deckender
-V wesentlich deckender
-IV deutlich deckender
-III merklich deckender
-II etwas deckender
-I eine Spur deckender
/=/ etwa wie
+I eine Spur transparenter
+II etwas transparenter
+III merklich transparenter
+IV deutlich transparenter
+V wesentlich transparenter
+VI bedeutend transparenter

Die erhaltenen Ergebnisse für die UV-Vis-Maxima, die Farbstärke, die Farbtonverschiebung dH und die Transparenz sind in Tabelle 1 wiedergegeben:

**Tabelle 1**

| Vergleichsbeispiel | UV-Vis [nm] | Farbstärke [%] | dH | Transparenz |
|---|---|---|---|---|
| F | 438 | 100 | --- | --- |
| G | 433 | 97 | -I | /=/ |
| H | 439 | 94 | -III | +I |

| Beispiel | | | | |
|---|---|---|---|---|
| A | 429 | 119 | +II | +VI |
| B | 430 | 122 | +III | +V |
| C | 431 | 112 | +IV | +IV |
| D | 434 | 115 | +III | +III |

Es zeigt sich, dass die erfindungsgemäßen Farbmittelzubereitungen (Beispiele A bis D) im Vergleich zur Farbmittelzubereitung basierend auf reinem C.I. Pigment Yellow 74 im UV-Vis-Spektrum ein Absorptionsmaximum bei kleineren Wellenlängen aufweisen und somit ein grünstichigeres Gelb als dieses darstellen. Darüber hinaus ist die Farbstärke der erfindungsgemäßen Farbmittelzubereitungen in der Weissaufhellung im Vergleich zur Farbmittelzubereitung basierend auf reinem C.I. Pigment Yellow 74 deutlich höher. Des Weiteren sind die erfindungsgemäßen Farbmittelzubereitungen im Vergleich zur Farbmittelzubereitung basierend auf reinem C.I. Pigment Yellow 74 transparenter und in der Weissaufhellung im Farbton grüner.
Die durch Co-Mahlung von C.I. Pigment Yellow 74 und C.I. Pigment Yellow 65 im Mol-Verhältnis 9 zu 1 erhaltene Farbmittelzubereitung (Vergleichsbeispiel H) weist im Vergleich zur Farbmittelzubereitung basierend auf der Mischkupplung der beiden Pigmente (Beispiel A) im selben Verhältnis einen wesentlich röteren Farbton auf. Darüber hinaus ist die Farbmittelzubereitung aus Vergleichsbeispiel H deckender und farbschwächer.

### IV. Prüfung der drucktechnischen Eigenschaften der Farbmittelzubereitungen

Um die drucktechnischen Eigenschaften zu beurteilen, wurden aus den Farbmittelzubereitungen der Beispiele A bis D und Vergleichsbeispiel E Testtinten hergestellt und deren Verdruckbarkeit mit einem thermischen Ink-Jet-Drucker untersucht.

Für die Herstellung der Testtinten wurden die Farbmittelzubereitungen zunächst über einen 1 µm-Filter feinfiltriert, um Mahlkörperabrieb und eventuelle Grobanteile abzutrennen. Danach wurden die filtrierten Farbmittelzubereitungen mit Wasser verdünnt und mit weiteren niedermolekularen Alkoholen und Polyolen versetzt. Die Testtinten hatten dann die folgende Zusammensetzung:
- 25 Teile: Farbmittelzubereitung
- 10 Teile: Ethylenglykol
- 10 Teile: Diethylenglykol
- 50 Teile: Entmineralisiertes Wasser

Mit dem Drucker HP 960C (Hewlett Packard) wurden Testbilder auf handelsübliche Normalpapiere (Kopierpapiere) und Spezialpapiere (Premium Qualität) der Firma Hewlett Packard gedruckt. Die Beurteilung bzgl. Qualität und Güte des Druckbildes erfolgte durch visuelle Betrachtung.
Die Ergebnisse sind in Tabelle 2 wiedergegeben.

**Tabelle 2**

| | Druckqualität |
|---|---|
| Vergleichsbeispiel E | Tinte druckt nicht! |
| Beispiel A | sehr gut |
| Beispiel B | sehr gut |
| Beispiel C | sehr gut |
| Beispiel D | sehr gut |

Die aus den Farbmittelzubereitungen der Beispiele A bis D hergestellten Testtinten zeigten dabei ein sehr gutes Druckverhalten. Allerdings führt die Testtinte basierend auf einer Farbmittelzubereitung enthaltend Kolophoniumharz (Vergleichsbeispiel E) zu einem sofortigen Ausfall der Druckdüsen.

## Patentansprüche

1. Verwendung einer Pigmentzusammensetzung, enthaltend zwischen 86,0 und 99,9 Gesamt-Mol-% an C.I. Pigment Yellow 74-Molekülen und zwischen 14,0 und 0,1 Gesamt-Mol-% an mindestens einem Monoazopigment der Formel (1) 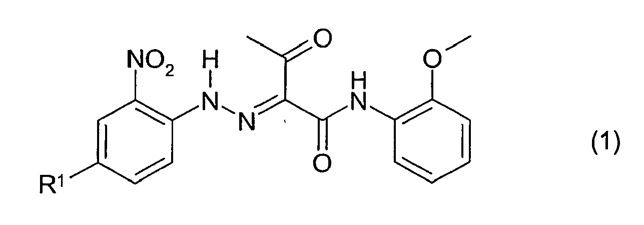 worin R¹ Cl, OCH₃, CH₃ oder NO₂ bedeutet,
als Farbmittel zum Pigmentieren von Ink-Jet-Tinten und Farbfiltern.

2. Verwendung nach Anspruch 1, **dadurch gekennzeichnet, dass** die Pigmentzusammensetzung zwischen 86,5 und 99,5 Gesamt-Mol-% an C.I. Pigment Yellow 74-Molekülen und zwischen 13,5 und 0,5 Gesamt-Mol-% an mindestens einem Monoazopigment der Formel (1) enthält.

3. Verwendung nach Anspruch 1 oder 2, **dadurch gekennzeichnet, dass** die Pigmentzusammensetzung zwischen 87,0 und 94,0 Gesamt-Mol-% an C.I. Pigment Yellow 74-Molekülen und zwischen 13,0 und 6,0 Gesamt-Mol-% an mindestens einem Monoazopigment der Formel (1) enthält.

4. Verwendung nach mindestens einem der Ansprüche 1 bis 3, **dadurch gekennzeichnet, dass** die Pigmentzusammensetzung zwischen 88 und 92 Gesamt-Mol-% an C.I. Pigment Yellow 74-Molekülen und zwischen 12 und 8 Gesamt-Mol-% an C.I. Pigment Yellow 65-Molekülen enthält.

5. Verwendung nach mindestens einem der Ansprüche 1 bis 4, **dadurch gekennzeichnet, dass** die Pigmentzusammensetzung zu mehr als 15 Gew.-%, bezogen auf das Gesamtgewicht der Pigmentzusammensetzung, an Mischkristallen aus C.I. Pigment Yellow 74 und einer Verbindung der Formel (1) besteht.

6. Verwendung nach mindestens einem der Ansprüche 1 bis 5, **dadurch gekennzeichnet, dass** die Pigmentzusammensetzung zu mehr als 30 Gew.-%, bezogen auf das Gesamtgewicht der Pigmentzusammensetzung, an Mischkristallen aus C.I. Pigment Yellow 74 und einer Verbindung der Formel (1) besteht.

7. Verwendung nach mindestens einem der Ansprüche 1 bis 6, **dadurch gekennzeichnet, dass** die Pigmentzusammensetzung zu mehr als 50 Gew.-%, bezogen auf das Gesamtgewicht der Pigmentzusammensetzung, an Mischkristallen aus C.I. Pigment Yellow 74 und einer Verbindung der Formel (1) besteht.

8. Verwendung nach mindestens einem der Ansprüche 1 bis 7, **dadurch gekennzeichnet, dass** die Pigmentzusammensetzung zu mehr als 75 Gew.-%, bezogen auf das Gesamtgewicht der Pigmentzusammensetzung, an Mischkristallen aus C.I. Pigment Yellow 74 und einer Verbindung der Formel (1) besteht.

9. Verwendung nach mindestens einem der Ansprüche 5 bis 8, **dadurch gekennzeichnet, dass** die Mischkristalle zwischen 70 und 99,9 Mol-% Pigment Yellow 74 und zwischen 30 und 0,1 Mol-% einer Verbindung der Formel (1) enthalten.

10. Verwendung nach mindestens einem der Ansprüche 1 bis 9, **dadurch gekennzeichnet, dass** die Pigmentzusammensetzung im Wesentlichen frei von alkalilöslichen Harzen ist.

## Claims

1. The use of a pigment composition containing between 86.0 and 99.9 overall mol% of C.I. Pigment Yellow 74 molecules and between 14.0 and 0.1 overall mol% of at least one monoazo pigment of the formula (1) 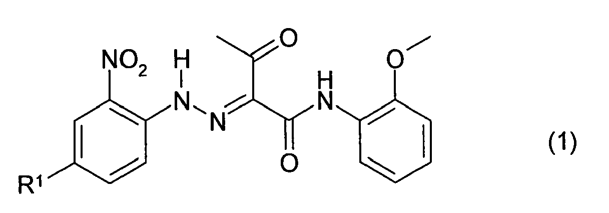 in which R¹ is CI, OCH₃, CH₃ or NO₂
as a colorant for pigmenting ink-jet inks and color filters.

2. The use as claimed in claim 1, wherein the pigment composition contains between 86.5 and 99.5 overall mol% of C.I. Pigment Yellow 74 molecules and between 13.5 and 0.5 overall mol% of at least one monoazo pigment of the formula (1).

3. The use as claimed in claim 1 or 2, wherein the pigment composition contains between 87.0 and 94.0 overall mol% of C.I. Pigment Yellow 74 molecules and between 13.0 and 6.0 overall mol% of at least one monoazo pigment of the formula (1).

4. The use as claimed in at least one of claims 1 to 3, wherein the pigment composition contains between 88 and 92 overall mol% of C.I. Pigment Yellow 74 molecules and between 12 and 8 overall mol% of C.I. Pigment Yellow 65 molecules.

5. The use as claimed in at least one of claims 1 to 4, wherein the pigment composition is made up of more than 15% by weight, based on the overall weight of the pigment composition, of mixed crystals of C.I. Pigment Yellow 74 and a compound of the formula (1).

6. The use as claimed in at least one of claims 1 to 5, wherein the pigment composition is made up of more than 30% by weight, based on the overall weight of the pigment composition, of mixed crystals of C.I. Pigment Yellow 74 and a compound of the formula (1).

7. The use as claimed in at least one of claims 1 to 6, wherein the pigment composition is made up of more than 50% by weight, based on the overall weight of the pigment composition, of mixed crystals of C.I. Pigment Yellow 74 and a compound of the formula (1).

8. The use as claimed in at least one of claims 1 to 7, wherein the pigment composition is made up of more than 75% by weight, based on the overall weight of the pigment composition, of mixed crystals of C.I. Pigment Yellow 74 and a compound of the formula (1).

9. The use as claimed in at least one of claims 5 to 8, wherein the mixed crystals contain between 70 and 99.9 mol% of Pigment Yellow 74 and between 30 and 0.1 mol% of a compound of the formula (1).

10. The use as claimed in at least one of claims 1 to 9, wherein the pigment composition is substantially free from alkali-soluble resins.

## Revendications

1. Utilisation d'une composition pigmentaire, contenant entre 86,0 et 99,9% en mole au total de molécules de C.I. Pigment Yellow 74 et entre 14,0 et 0,1% en mole au total d'au moins un pigment monoazo de formule (1) 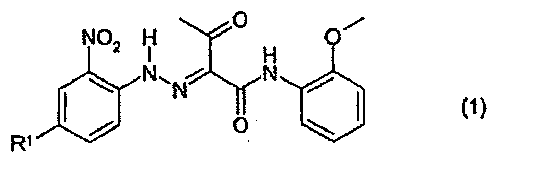 où R¹ signifie C1, OCH₃, CH₃ ou NO₂,
comme colorant pour la pigmentation d'encres à jet d'encre et de filtres couleur.

2. Utilisation selon la revendication 1, **caractérisée en ce que** la composition pigmentaire contient entre 86,5 et 99,5% en mole au total de molécules de C.I. Pigment Yellow 74 et entre 13,5 et 0,5% en mole au total d'au moins un pigment monoazo de formule (1).

3. Utilisation selon la revendication 1 ou 2, **caractérisée en ce que** la composition pigmentaire contient entre 87,0 et 94,0% en mole au total de molécules de C.I. Pigment Yellow 74 et entre 13,0 et 6,0% en mole au total d'au moins un pigment monoazo de formule (1).

4. Utilisation selon au moins l'une quelconque des revendications 1 à 3, **caractérisée en ce que** la composition pigmentaire contient entre 88 et 92% en mole au total de molécules de C.I. Pigment Yellow 74 et entre 12 et 8% en mole au total de molécules de C.I. Pigment Yellow 65.

5. Utilisation selon au moins l'une quelconque des revendications 1 à 4, **caractérisée en ce que** la composition pigmentaire est constituée par, à raison de plus de 15% en poids, par rapport au poids total de la composition pigmentaire, des cristaux mixtes de C.I. Pigment Yellow 74 et un composé de formule (1).

6. Utilisation selon au moins l'une quelconque des revendications 1 à 5, **caractérisée en ce que** la composition pigmentaire est constituée par, à raison de plus de 30% en poids, par rapport au poids total de la composition pigmentaire, des cristaux mixtes de C.I. Pigment Yellow 74 et un composé de formule (1).

7. Utilisation selon au moins l'une quelconque des revendications 1 à 6, **caractérisée en ce que** la composition pigmentaire est constituée par, à raison de plus de 50% en poids, par rapport au poids total de la composition pigmentaire, des cristaux mixtes de C.I. Pigment Yellow 74 et un composé de formule (1).

8. Utilisation selon au moins l'une quelconque des revendications 1 à 7, **caractérisée en ce que** la composition pigmentaire est constituée par, à raison de plus de 75% en poids, par rapport au poids total de la composition pigmentaire, des cristaux mixtes de C.I. Pigment Yellow 74 et un composé de formule (1).

9. Utilisation selon au moins l'une quelconque des revendications 5 à 8, **caractérisée en ce que** les cristaux mixtes contiennent entre 70 et 99,9% en mole de Pigment Yellow 74 et entre 30 et 0,1% en mole d'un composé de formule (1).

10. Utilisation selon au moins l'une quelconque des revendications 1 à 9, **caractérisée en ce que** la composition pigmentaire est essentiellement exempte de résines solubles dans les alcalis.
